# EUROPÄISCHE PATENTSCHRIFT

(11) **EP 4 106 596 B1**
(45) Veröffentlichungstag und Bekanntmachung des Hinweises auf die Patenterteilung: **12.03.2025**
(21) Anmeldenummer: 21702257.3
(22) Anmeldetag: 27.01.2021
(51) Int. Cl.: A47L 15/00, A47L 15/42

(54) **SYSTEM MIT EINER GESCHIRRSPÜLMASCHINE UND VERFAHREN ZUM BETREIBEN EINER GESCHIRRSPÜLMASCHINE**
SYSTEM COMPRISING A DISHWASHER AND METHOD FOR OPERATING A DISHWASHER
SYSTÈME COMPRENANT UN LAVE-VAISSELLE, ET PROCÉDÉ DE FONCTIONNEMENT D'UN LAVE-VAISSELLE

(30) Priorität: 19.02.2020 DE 102020202142
(43) Veröffentlichungstag der Anmeldung: 28.12.2022
(73) Patentinhaber: BSH Hausgeräte GmbH, 81739 München (DE)
(72) Erfinder: RUPP, Michael, 89438 Holzheim (DE); PAINTNER, Kai, 86465 Welden (DE); SINGH, Kuldeep Narayan, 89407 Dillingen a.d. Donau (DE)
(86) Internationale Anmeldenummer: PCT/EP2021/051843
(87) Internationale Veröffentlichungsnummer: WO 2021/165003

(56) Entgegenhaltungen:
- EP-A1- 3 485 794
- EP-A2- 1 192 893
- CN-A- 109 620 078
- DE-A1- 10 048 081
- DE-A1- 102015 215 984
- DE-A1- 102017 212 323
- DE-A1- 102017 212 333
- US-A1- 2012 138 092

## Beschreibung

Die vorliegende Erfindung betrifft ein System mit einer Geschirrspülmaschine und ein Verfahren zum Betreiben einer Geschirrspülmaschine.

Die Reinigungsleistung von bekannten Geschirrspülmaschinen hängt von dem gewählten Spülprogramm ab, welches vorzugsweise durch den Nutzer in Abhängigkeit der Beladung der Geschirrspülmaschine geeignet eingestellt und gestartet werden sollte. Es hat sich gezeigt, dass Nutzer angesichts der vielen Optionen, die ihnen hierbei zur Verfügung stehen, überfordert werden. Dies führt dazu, dass viele Nutzer trotz der vielfältigen Möglichkeiten zumeist nur ein "Standard-Programm" starten. Es sind Geschirrspülmaschinen bekannt, die anhand verschiedener Sensorik beispielsweise eine Beladungsmenge der Geschirrspülmaschine mit Spülgut sowie eine Schmutzfracht auf dem Spülgut automatisch ermitteln und daraufhin das Spülprogramm entsprechend anpassen. Hierdurch lassen sich beispielsweise Einsparungen sowie Verbesserungen des Spülergebnisses gegenüber einem manuellen Betrieb erreichen. Eine optimale Steuerung des Spülprogramms ist aber nicht möglich, da beispielsweise Informationen zu der Anordnung des Spülguts oder einer Beschaffenheit des Spülguts nicht ermittelt werden.

WO 2018 103 958 A1 beschreibt eine Geschirrspülmaschine, die mittels einer Netzwerkverbindung mit einem Server kommunizieren kann. Mittels eines Mobilgeräts wird ein Bild des in der Geschirrspülmaschine angeordneten Spülguts aufgenommen und an den Server übertragen. Der Server vergleicht das empfangene Bild mit abgespeicherten Referenzbildern, um die Art der Beladung zu ermitteln. Basierend hierauf wird durch den Server ein geeignetes Spülprogramm ausgewählt und an die Geschirrspülmaschine übertragen.

CN 109 620 078 A offenbart eine Geschirrspülmaschine mit einer Kamera, wobei auf Basis eines erfassten Kamerabildes einer Spülgutaufnahme der Geschirrspülmaschine das in der Spülgutaufnahme angeordnete Spülgut ermittelt wird und ein entsprechend optimiertes Spülprogramm ermittelt wird.

US 2012/138092 A1 offenbart eine Geschirrspülmaschine mit einer Kamera, die dazu eingerichtet ist, einen Teilbereich einer Spülgutaufnahme der Geschirrspülmaschine zu erfassen. Durch Aufnahme einer Mehrzahl von Bildern unterschiedlicher Teilbereiche wird die Spülgutaufnahme insgesamt erfasst, wobei auf Basis der mehreren Bilder eine Anordnung von Spülgut in der Spülgutaufnahme ermittelt wird und das Spülprogramm entsprechend optimiert wird.

EP 3 485 794 A1, DE 10 2017 21233 A1, DE 10 2017 212323 A1 und DE 100 48 081 A1 offenbaren weitere herkömmliche Geschirrspülmaschinen.

Vor diesem Hintergrund besteht eine Aufgabe der vorliegenden Erfindung darin, den Betrieb einer Geschirrspülmaschine weiter zu verbessern.

Gemäß einem ersten Aspekt wird ein System mit einer Geschirrspülmaschine, vorzugsweise einer Haushalts-Geschirrspülmaschine, mit einer Steuerungsvorrichtung zum Durchführen eines Spülprogramms, welches mittels einer Anzahl unterschiedlicher Spülprogrammparameter parametrierbar ist, und mit einer Bilderfassungseinrichtung zum Erfassen eines Bildes einer Spülgutaufnahme der Geschirrspülmaschine vorgeschlagen. Das System umfasst ferner eine Bildanalyseeinheit zum Klassifizieren von in der Spülgutaufnahme angeordnetem Spülgut in Abhängigkeit des erfassten Bildes der Spülgutaufnahme und zum Ausgeben eines Klassifizierungsergebnisses an die Steuerungsvorrichtung. Das Klassifizierungsergebnis umfasst eine Information bezüglich der Menge, der Art und/oder der Position des in der Spülgutaufnahme angeordneten Spülguts. Die Steuerungsvorrichtung ist zum Parametrieren des Spülprogramms in Abhängigkeit des Klassifizierungsergebnisses eingerichtet. Die Geschirrspülmaschine weist eine Positionssensoreinheit zum Erfassen einer Position der Spülgutaufnahme und zum Ausgeben eines Positionssignals an die Bilderfassungseinrichtung auf. Die Bilderfassungseinrichtung ist zum Erfassen des Bildes in Abhängigkeit des Positionssignals eingerichtet. Die Positionssensoreinheit ist dazu eingerichtet, das Positionssignal auszugeben, wenn die Spülgutaufnahme in einem Bildfeld der Bilderfassungseinrichtung vollständig sichtbar ist.

Dieses System weist den Vorteil auf, dass bei dem Parametrieren des Spülprogramms eine Beschaffenheit, wie ein Material, des in der Spülgutaufnahme angeordneten Spülguts berücksichtigt werden kann. Zudem kann eine räumliche Anordnung des Spülguts in der Spülgutaufnahme berücksichtigt werden. Insgesamt lässt sich das Spülprogramm somit auch bei sehr unterschiedlichen Situationen, wie unterschiedlichem Spülgut und/oder unterschiedlicher Anordnung des Spülguts in der Spülgutaufnahme optimal parametrieren, was zu einem verbesserten Spülergebnis beiträgt. Darüber hinaus lassen sich Ressourcen, wie Wasser, Zeit, Energie sowie Reinigungsmittel einsparen, da das Spülprogramm sehr gezielt parametrierbar ist. Beispielsweise kann erkannt werden, dass nur in einer unteren Spülgutaufnahme Spülgut zum Spülen ist, eine obere Spülgutaufnahme dagegen leer ist. Dann kann das Spülprogramm so parametriert werden, dass während der Durchführung nur ein unterer Sprüharm mit Spülflotte beaufschlagt wird. Das Spülprogramm benötigt daher weniger Wasser, Energie und Spülmittel und kann zudem in kürzerer Zeit abgeschlossen werden. Vorteilhaft erfolgt das Parametrieren des Spülprogramms vorliegend vollautomatisch und spezifisch jedes Mal, wenn ein Nutzer die Geschirrspülmaschine startet, ohne dass der Nutzer hierbei eine Auswahl treffen müsste. Die genannten Vorteile werden insbesondere mit nur einer einzigen Bilderfassungseinrichtung erreicht, selbst dann, wenn die Geschirrspülmaschine mehrere Spülgutaufnahmen aufweist.

Die Steuerungsvorrichtung kann hardwaretechnisch und/oder softwaretechnisch implementiert sein. Bei einer hardwaretechnischen Implementierung kann die Steuerungsvorrichtung zum Beispiel als Computer oder als Mikroprozessor ausgebildet sein. Bei einer softwaretechnischen Implementierung kann die Steuerungsvorrichtung als Computerprogrammprodukt, als eine Funktion, als eine Routine, als Teil eines Programmcodes oder als ausführbares Objekt ausgebildet sein.

Es kann vorgesehen sein, dass eine Anzahl unterschiedlicher Spülprogramme vorgegeben ist, wobei ein Nutzer oder auch durch die Steuerungsvorrichtung eines der Spülprogramme auswählt. Die vorgegebenen Spülprogramme sind dabei beispielsweise eine Intensivprogramm, ein Kurzprogramm, ein Schonprogramm, ein Energiesparprogramm oder auch ein Glasprogramm. Diese Spülprogramm unterscheiden sich insbesondere bezüglich ihrer Parameterbereiche für einzelne oder alle Spülprogrammparameter, um den jeweils im Vordergrund stehenden Aspekt bestmöglich zu ermöglichen. Beispielsweise ist bei dem Intensivprogramm der im Vordergrund stehende Aspekt eine besonders hohe Reinigungswirkung, die beispielsweise bei sehr stark verschmutztem Spülgut erforderlich sein kann. Diese wird beispielsweise mittels einer hohen Spülflottentemperatur, einer hohen Menge an zugegebenem Reinigungsmittel, einer längeren Programmlaufzeit und/oder einem hohen Pumpendrehzahl erreicht. Bei dem Energiesparprogramm steht beispielsweise ein möglichst geringer Energieverbrauch im Vordergrund, der beispielsweise mittels einer geringen Spülflottentemperatur, einer geringen Pumpendrehzahl und einer längeren Programmlaufzeit erreicht werden kann. Dabei sind die Spülprogrammparameter für jedes der Spülprogramme der Anzahl nicht festgelegt, sondern beispielsweise innerhalb vorbestimmter Grenzen wählbar. Zum Parametrieren des jeweiligen Spülprogramms wählt die Steuerungsvorrichtung dann einen Wert innerhalb des jeweils vorbestimmten Wertebereichs aus.

Die Bilderfassungseinrichtung umfasst vorzugsweise einen digitalen Sensor mit einer Sensorfläche, die eine Mehrzahl an lichtempfindlichen Bildpunkten (Pixel) aufweist, wie beispielsweise ein CMOS (*complementary metal-oxide-semiconductor*) oder CCD (*charge-coupled-device*). Eine Auflösung des digitalen Sensors beträgt vorzugsweise wenigstens 0,3 MP (MP = Megapixel), bevorzugt wenigstens 1 MP, weiter bevorzugt bis zu 8 MP, weiter bevorzugt zwischen 8 - 16 MP, weiter bevorzugt über 16 MP. Die Bilderfassungseinrichtung ist damit zum Ausgeben eines digitalen Bildes, vorzugsweise als ein Datensatz, eingerichtet, das sich mittels digitaler Daten- oder Signalverarbeitung weiterverarbeiten lässt. Die Bilderfassungsvorrichtung ist hierbei fest an der Geschirrspülmaschine angeordnet. Die Bilderfassungseinrichtung kann zudem ein Optikelement, wie eine Linse oder ein Spiegel, umfassen, um einen Erfassungsbereich der Bilderfassungseinrichtung zu optimieren. Einzelne Elemente der Bilderfassungseinrichtung können dabei auch beweglich gelagert sein, so dass beispielsweise eine Fokusebene und/oder der Erfassungsbereich verändert werden können. Weiterhin kann die Bilderfassungseinrichtung eine Steuerung aufweisen, die beispielsweise eine Fokussierung vornimmt, einen Erfassungsbereich auswählt und/oder Belichtungseinstellungen festlegt und die Bilderfassungseinrichtung auslöst.

Die Geschirrspülmaschine weist vorzugsweise eine oder mehrere Spülgutaufnahmen auf. Die Spülgutaufnahmen können auch als Geschirrkorb bezeichnet werden. Die Geschirrspülmaschine weist beispielsweise einen Spülbehälter auf, der mittels einer Tür verschließbar ist. Die Spülgutaufnahmen sind bei geschlossener Tür in dem Spülbehälter angeordnet und vorzugsweise aus dem Spülbehälter herausverlagerbar, beispielsweise mittels eines Schienen- und/oder Rollensystems. Damit lassen sich die Spülgutaufnahmen zum komfortablen Beladen mit Spülgut aus dem Spülbehälter ausziehen.

Die Bildanalyseeinheit kann hardwaretechnisch und/oder softwaretechnisch implementiert sein. Bei einer hardwaretechnischen Implementierung kann die Bildanalyseeinheit zum Beispiel als Computer oder als Mikroprozessor, vorzugsweise als Grafikprozessor, ausgebildet sein. Bei einer softwaretechnischen Implementierung kann die Bildanalyseeinheit als Computerprogrammprodukt, als eine Funktion, als eine Routine, als Teil eines Programmcodes oder als ausführbares Objekt ausgebildet sein.

Die Bildanalyseeinheit ist vorzugsweise Bestandteil der Geschirrspülmaschine, es kann aber auch vorgesehen sein, dass die Bildanalyseeinheit extern zu der Geschirrspülmaschine angeordnet ist.

Die Bildanalyseeinheit ist zum Durchführen einer Bilderkennung eingerichtet, um das in der Spülgutaufnahme angeordnete Spülgut zu klassifizieren. Dabei kann die Bildanalyseeinheit insbesondere eine Klassifikation, eine Lokalisation, eine Objekterfassung und/oder eine *Instance Segmentation* des Bildes durchführen. Die Bildanalyseeinheit ist zum Anwenden unterschiedlicher digitaler Signalverarbeitungsverfahren, wie Filterverfahren, Datenanalysealgorithmen und dergleichen eingerichtet.

Das Ergebnis der Klassifikation umfasst beispielsweise eine Information betreffend eine Verteilung und eine Art des Spülguts in der Spülgutaufnahme. Hierbei werden insbesondere Materialklassen des Spülguts, wie Glas, Metall, Kunststoff, Holz oder Keramik unterschieden. Zusätzlich wird auch eine Klasse "Leer" unterschieden, wenn an einer bestimmten kein Spülgut angeordnet ist. Eine zusätzliche Klasse ist beispielsweise "Unbestimmt", wenn die Bildanalyseeinheit kein klares Ergebnis erzielt.

Das Klassifikationsergebnis ist für eine jeweiliges erfasstes Bild vorzugsweise pixelgenau, das heißt, dass für jeden Pixel des erfassten Bildes eine Zuordnung zu einer der vorgesehenen Klassen enthalten ist. Damit lässt sich eine sehr präzise Parametrierung des Spülprogramms durch die Steuerungsvorrichtung erzielen. Die Klassifikation erfolgt somit vorzugsweise quantitativ.

Die Klassifikation wird vorzugsweise erst dann durchgeführt, wenn ein Nutzer die Geschirrspülmaschine zum Durchführen eines Spülprogramms gestartet hat. Damit lässt sich vermeiden, dass eine Klassifikation durchgeführt wird, noch bevor ein endgültiger Beladungszustand der Geschirrspülmaschine mit Spülgut feststeht. Weiterhin bleibt direkt nach dem Start eine Spülprogramms noch ausreichend Zeit, um die Klassifikation durchzuführen, da zunächst beispielsweise Wasser zugeführt und erwärmt wird.

Zum Parametrieren des Spülprogramms legt die Steuerungsvorrichtung einen Wert für zumindest einen Spülprogrammparameter in Abhängigkeit des Klassifizierungsergebnisses fest. Dies schließt nicht aus, dass einzelne Spülprogrammparameter beispielsweise einen Standardwert aufweisen. Beispiele für parametrierbare Spülprogrammparameter sind eine Wassertemperatur, eine Dauer eines Teilprogrammschritts, eine Pumpendrehzahl einer Umwälzpumpe, ein Dosieren eines Reinigungsmittels eines automatischen Dosiersystems, wobei dies sowohl einen Dosierzeitpunkt als auch eine dosierte Menge umfassen kann, ein Steuern einer Wasserweiche, ein Aktivieren und/oder Steuern einer Sonderspülzone, und ein Aktivieren und/oder Steuern einer Trocknungseinrichtung . Die genannten Spülprogrammparameter können dabei für jeden Teilprogrammschritt eines jeweiligen Spülprogramms individuell durch die Steuerungsvorrichtung festgelegt werden. Die Steuerungsvorrichtung kann dazu eingerichtet sein, das gesamte Spülprogramm zu erzeugen, also aus einzelnen Teilprogrammschritten, wie ein Einweichen, ein Vorspülen, ein Hauptspülen, ein Klarspülen, ein Trocknen und dergleichen mehr, ein Spülprogramm zusammenzustellen, wobei die Spülprogrammparameter für jeden der Teilprogrammschritte individuell festgelegt werden. Man kann auch sagen, dass durch die Steuerungsvorrichtung für jeden Teilprogrammschritt bei dem Parametrieren des Spülprogramms eine Teilprogrammschritt-Parametermatrix festgelegt wird.

Die Steuerungsvorrichtung ist dazu eingerichtet, das derart parametrierte Spülprogramm durchzuführen.

Die Geschirrspülmaschine weist eine Positionssensoreinheit zum Erfassen einer Position der Spülgutaufnahme und zum Ausgeben eines Positionssignals an die Bilderfassungseinrichtung auf, wobei die Bilderfassungseinrichtung zum Erfassen des Bildes in Abhängigkeit des Positionssignals eingerichtet ist.

Dies hat den Vorteil, dass die Bilderfassungseinrichtung das Bild der Spülgutaufnahme dann erfasst, wenn diese in einer vorbestimmten Position, insbesondere in einem Erfassungsbereich der Bilderfassungseinrichtung, angeordnet ist. Wie vorstehend erläutert, ist die Spülgutaufnahme aus dem Spülbehälter herausverlagerbar gelagert. Die Positionssensoreinheit ist vorzugsweise dazu eingerichtet, das Positionssignal derart auszugeben, dass die Bilderfassungseinrichtung das Bild erfasst, wenn die Spülgutaufnahme in einer herausverlagerten Position ist, also aus dem Spülbehälter zum Beladen herausgezogen ist.

Die Positionssensoreinheit kann einen mechanischen Schalter oder Taster, einen Näherungssensor, einen Magnetsensor, einen kapazitiven Sensor, einen Ultraschallsensor, eine Lichtschranke, einen Neigungswinkelsensor, einen Marker auf Spülgutaufnahme oder dergleichen umfassen. Beispielsweise umfasst die Positionssensoreinheit einen Magnetsensor, der nahe einer Beschickungsöffnung des Spülbehälters angeordnet ist, wobei an der Spülgutaufnahme ein korrespondierender Magnet angeordnet ist. Wenn die Spülgutaufnahme herausgezogen wird kommt der Magnet in der ausgezogenen Position der Spülgutaufnahme in die Nähe des Magnetsensors oder wird an diesem vorbeigeführt. Dann gibt die Positionssensoreinheit ein Signal aus, das die Bilderfassungseinrichtung dazu veranlasst, ein Bild zu erfassen, auf dem in diesem Fall dann die Spülgutaufnahme zu sehen ist. Die Positionssensoreinheit kann auch eine Kombination mehrerer der vorgenannten Sensoren umfassen oder beim Ausgeben des Positionssignals die Sensorsignale mehrerer der Sensoren berücksichtigen.

Die Positionssensoreinheit ist dazu eingerichtet, das Positionssignal auszugeben, wenn die Spülgutaufnahme in einem Bildfeld der Bilderfassungseinrichtung vollständig sichtbar ist.

In Ausführungsformen kann vorgesehen sein, dass ein Nutzer das Erfassen eines Bildes manuell auslöst. Dies kann mittels einer Geste, einem Sprachbefehl und/oder mittels einer Eingabeeinrichtung, wie einem Knopf oder einem berührungsempfindlichen Taster oder dergleichen erfolgen.

Gemäß einer weiteren Ausführungsform ist die Bilderfassungseinrichtung zum Erfassen eines erweiterten Spektralbereichs eingerichtet, der zumindest den visuellen Spektralbereich und den nahen Infrarotbereich umfasst.

Diese Ausführungsform ist vorteilhaft, da das erfasste Bild mehr Informationen enthalten, die für die Bildanalyseeinheit zur Verfügung stehen. Zudem kann der nahe Infrarotbereich, der beispielsweise einen Bereich von 800 nm - 2500 nm umfasst, auch bei ungünstigen visuellen Beleuchtungsbedingungen verwendbar sein.

In Ausführungsformen kann vorgesehen sein, die Bilderfassungseinrichtung als eine monochrome Kamera oder eine Zwei-Farb-Kamera auszubilden. In einer Ausführungsform erfasst die monochrome Kamera beispielsweise das gesamte Spektrum, gibt aber nur ein Graustufenbild aus. In einer weiteren Ausführungsform ist ein Filter vor einem Sensor der Kamera angeordnet ist, welches nur einen schmalen Bereich des Spektrums passieren lässt, beispielsweise einen Wellenlängenbereich mit einer Halbwertsbreite von 10 nm, 20 nm, 30 nm, 40 nm, oder bis zu 50 nm, um eine zentrale Wellenlänge herum. Eine Zwei-Farb-Kamera weist beispielsweise entsprechend zwei unterschiedliche Filter auf, die jeweils unterschiedliche Pixel des Bildsensors überdecken, so dass das erfasste Bild zwei Farbkanäle aufweist.

In Ausführungsformen ist die Bildanalyseeinheit dazu eingerichtet, aus dem gesamten Spektralbereich des erfassten Bildes zwei Teilbereiche (Farbkanäle) auszuwählen, die sich vorzugsweise nicht überlappen. Die Auswahl wird insbesondere derart getroffen, dass Kontraste zwischen den unterschiedlichen, jeweils einer Klasse zugeordneten Spülgut-Materialien besonders hoch sind. Vorzugsweise werden die zu verwendenden Farbkanäle für eine Geschirrspülmaschine vorbestimmt und bleiben dann festgelegt. Für unterschiedliche Geschirrspülmaschinen können aber auch unterschiedliche Farbkanäle ausgewählt werden. Es kann ferner vorgesehen sein, dass die Auswahl der Farbkanäle in Abhängigkeit bestimmter Parameter, wie beispielsweise einer Umgebungshelligkeit, einer Farbtemperatur des Umgebungslichts oder dergleichen jedes Mal neu erfolgt. Dabei kann auch vorgesehen sein, dass ein Farbkanal verbreitert oder verschmälert wird. Auf diese Weise kann die Zuverlässigkeit der Klassifikation durch die Bildanalyseeinheit erhöht werden.

In Ausführungsformen ist ferner eine Beleuchtungseinheit vorgesehen, die zum Erfassen des Bildes durch die Bilderfassungseinrichtung die Spülgutaufnahme beleuchtet. Die Beleuchtungseinheit umfasst beispielsweise eine Blitzeinheit, die einen breitbandigen Blitz abgibt. Alternativ oder zusätzlich können auch ein Laserscanner vorgesehen sein, der die Spülgutaufnahme während der Bilderfassung abrastert. Dabei können selektiv einzelne, für die Klassifikation besonders geeignete, Wellenlängen für den jeweiligen Laser ausgewählt werden. Insbesondere kann die Beleuchtungseinheit einen infraroten Spektralbereich zur Beleuchtung verwenden, da dieser für das menschliche Auge nicht wahrnehmbar ist und somit einen Nutzer der Geschirrspülmaschine nicht irritiert.

Gemäß einer weiteren Ausführungsform umfasst die Geschirrspülmaschine ferner einen Spülbehälter mit einem um eine Beschickungsöffnung des Spülbehälters umlaufenden Spülbehälterflansch, wobei die Bilderfassungseinrichtung in oder an einem einer Decke des Spülbehälters zugeordneten oberen Flanschabschnitt des Spülbehälterflansches angeordnet ist, und wobei die Bilderfassungseinrichtung von dem Spülbehälter weg und schräg in Richtung einer von einem Boden des Spülbehälters aufgespannten Ebene weist.

Die Anordnung der Bilderfassungseinrichtung ist vorteilhaft, da diese damit außerhalb eines von der Spülflotte zugänglichen Bereichs angeordnet ist, weshalb die Umgebungsbedingungen auch für sensible elektronische Bauteile relativ einfach kontrollierbar sind. Der Spülbehälterflansch befindet sich vorzugsweise außerhalb einer mittels einer Dichteinrichtung abgedichteten Spülkammer.

Gemäß einer weiteren Ausführungsform ist in oder an dem Spülbehälterflansch ein Hohlraum vorgesehen, in dem die Bilderfassungseinrichtung zumindest abschnittsweise aufgenommen ist, wobei der Hohlraum, vorzugsweise in Richtung der Ebene, von einem transparenten Element begrenzt ist.

Diese Ausführungsform stellt sicher, dass die Bilderfassungseinrichtung derart an der Geschirrspülmaschine angeordnet ist, dass sie nicht hervorsteht oder als störend wahrgenommen wird. Auch kann eine Geschirrspülmaschine, die zwar den Spülbehälterflansch mit dem Hohlraum aufweist, aber nicht mit einer Bilderfassungseinrichtung ausgestattet ist, vergleichsweise einfach nachgerüstet werden.

Das transparente Element ist beispielsweise als eine Kunststoffscheibe, eine Mineralglasscheibe, eine Glasscheibe oder dergleichen ausgebildet. Das transparente Element stellt vorzugsweise eine Abdichtung des Hohlraums nach unten, in Richtung der Ebene hin, sicher, so dass Dampf aus der Spülkammer, wenn die Tür nach Ablauf eines Spülprogramms geöffnet wird, nicht in den Hohlraum eintreten kann. Beispielsweise ist hierzu eine entsprechende Dichteinrichtung vorgesehen. Das transparente Element ist vorzugsweise für den gesamten Spektralbereich, den die Bilderfassungseinrichtung erfasst, transparent. In Ausführungsformen kann aber auch vorgesehen sein, dass das transparente Element nur selektiv für bestimmte Bereiche des Spektralbereichs transparent ist. Dann wirkt das transparente Element zusätzlich als ein Filter.

In Ausführungsformen ist die Bilderfassungseinrichtung vollständig in dem Hohlraum angeordnet, wobei der Hohlraum insgesamt abgedichtet ist. Das heißt, dass insbesondere keine Feuchtigkeit in den Hohlraum eindringen kann, was für eine Lebensdauer der Bilderfassungseinrichtung vorteilhaft ist.

Gemäß einer weiteren Ausführungsform weist die Bilderfassungseinrichtung einen vertikalen Bildwinkel von wenigstens 90° und einen horizontalen Bildwinkel von wenigstens 120° auf.

Dies stellt sicher, dass die Spülgutaufnahme insgesamt erfasst werden kann, ohne dass einzelne Bereiche, beispielsweise Randbereiche, der Spülgutaufnahme auf dem erfassten Bild nicht zu sehen sind. Der jeweilige Bildwinkel wird vorzugsweise durch entsprechende optische Elemente bereitgestellt. Man kann auch von einer Ultraweitwinkel-Optik sprechen.

Das Klassifizierungsergebnis umfasst eine Information bezüglich der Menge, der Art und/oder der Position des in der Spülgutaufnahme angeordneten Spülguts.

In Ausführungsformen ist die Bildanalyseeinheit zum Klassifizieren des in der Spülgutaufnahme angeordneten Spülguts in Abhängigkeit des erfassten Bildes der Spülgutaufnahme in die Klassen Leer, Kunststoff, Metall, Glas oder Keramik eingerichtet.

"Leer" bedeutet hierbei, dass an der entsprechenden Position kein Spülgut angeordnet ist oder erkannt wurde. Es kann ferner eine Klasse "Unbekannt" vorgesehen sein, falls ein Bildpunkt nicht eindeutig einer der definierten Klassen zuordenbar ist.

Gemäß einer weiteren Ausführungsform ist die Bildanalyseeinheit zum Klassifizieren des in der Spülgutaufnahme angeordneten Spülguts in Abhängigkeit des erfassten Bildes der Spülgutaufnahme mittels eines neuronalen Netzwerks eingerichtet.

Das neuronale Netzwerk wurde insbesondere bereits vor einem Normalbetrieb der Geschirrspülmaschine, beispielsweise in einem Haushalt, mittels eines Trainingsdatensatzes, der beispielsweise 10.000 - 100.000 Bilder inklusive zugeordneter Klassifikation umfasst, trainiert.

Gemäß einer weiteren Ausführungsform ist eine Speichereinheit zum Speichern einer Anzahl von erfassten Bildern vorgesehen, wobei die Bildanalyseeinheit zum Klassifizieren des in der Spülgutaufnahme angeordneten Spülguts in Abhängigkeit von wenigstens einem der gespeicherten Bilder der Anzahl eingerichtet ist.

Beispielsweise werden mehrere der gespeicherten Bilder von der Bildanalyseeinheit für die Klassifikation herangezogen. Hierdurch lassen sich beispielsweise komplementäre Informationen erfassen, wodurch ein Informationsgehalt insgesamt erhöht sein kann, oder ein Signal-Rauschverhältnis kann verbessert werden.

Gemäß einer weiteren Ausführungsform ist die Bildanalyseeinheit in der Geschirrspülmaschine integriert.

Gemäß einer weiteren Ausführungsform sind die Bilderfassungseinrichtung und die Bildanalyseeinheit zusammen auf einem Substrat in einem integrierten Schaltkreis angeordnet.

Diese Anordnung ist besonders kompakt.

Gemäß einer weiteren Ausführungsform ist die Bildanalyseeinheit in einer extern zu der Geschirrspülmaschine angeordneten Einrichtung integriert, wobei die Geschirrspülmaschine eine Kommunikationseinheit zum Übermitteln des erfassten Bildes an die Bildanalyseeinheit, zum Empfangen des Klassifizierungsergebnisses von der Bildanalyseeinheit und zum Ausgeben des empfangenen Klassifizierungsergebnisses and die Steuerungsvorrichtung eingerichtet ist.

Die externe Einrichtung ist beispielsweise ein Server, der über das Internet erreichbar ist. Die Kommunikationseinheit ist zum Herstellen einer Kommunikationsverbindung mit der externen Einrichtung mittels WLAN, Mobilfunk, Bluetooth^{®}, LAN oder dergleichen eingerichtet. Die Kommunikationsverbindung kann hierbei über Drittgeräte, wie beispielsweise einen Router, vermittelt werden, wobei auch verschiedene Kommunikationsprotokolle zum Einsatz kommen können.

Diese Ausführungsform wiest den Vorteil auf, dass die Bildanalyseeinheit auf eine sehr hohe Rechenleistung zurückgreifen kann, die beispielsweise von dem Server bereitgestellt wird. Hierdurch kann die Klassifikation einerseits schneller erfolgen, andererseits können beispielsweise komplexere Algorithmen oder neuronale Netzwerke verwendet werden.

Gemäß einer weiteren Ausführungsform weist die Geschirrspülmaschine mehrere Spülgutaufnahmen auf, wobei die Bilderfassungseinrichtung zum Erfassen jeweils eines Bildes jeder der Spülgutaufnahmen eingerichtet ist.

Vorzugsweise ist die Bilderfassungseinrichtung dazu eingerichtet, ein erfasstes Bild der jeweiligen Spülgutaufnahme zuzuordnen. Die Zuordnung kann hierbei beispielsweise in Abhängigkeit eines Positionssignals, das von der Positionssensoreinheit bereitgestellt wird, erfolgen. Weiterhin kann ein Abstand zwischen der Bilderfassungseinrichtung und der Spülgutaufnahme in Abhängigkeit des Bildes erfasst werden, beispielsweise mittels einer Fokusbestimmung, von dem dann auf die jeweilige Spülgutaufnahme geschlossen wird. Weiterhin kann beispielsweise ein an der Tür der Geschirrspülmaschine angeordneter Neigungswinkelsensor ausgelesen werden, wobei bei schrägstehender Tür ausgeschlossen werden kann, dass eine untere Spülgutaufnahme ausgezogen ist.

Gemäß einem zweiten Aspekt wird ein Verfahren zum Betreiben einer Geschirrspülmaschine, vorzugsweise einer Haushalts-Geschirrspülmaschine, vorgeschlagen. In einem ersten Schritt wird ein Bild einer Spülgutaufnahme der Geschirrspülmaschine erfasst. In einem zweiten Schritt wird das in der Spülgutaufnahme angeordnete Spülgut in Abhängigkeit des erfassten Bildes klassifiziert. In einem dritten Schritt wird ein Klassifizierungsergebnis ausgegeben. In einem vierten Schritt wird ein Spülprogramm zum Spülen des Spülguts in Abhängigkeit des Klassifizierungsergebnisses parametriert.

In einem weiteren Schritt kann die Steuerungsvorrichtung das derart parametrierte Spülprogramm durchführen.

Das Verfahren wird vorzugsweise mit einem System gemäß dem ersten Aspekt durchgeführt. Das Verfahren weist die gleichen Vorteile auf, die für das System erläutert sind.

Die für das vorgeschlagene System beschriebenen Ausführungsformen und Merkmale gelten für das vorgeschlagene Verfahren entsprechend.

Gemäß einem dritten Aspekt wird ein Computerprogrammprodukt vorgeschlagen, welches Befehle umfasst, die bei der Ausführung des Programms durch einen Computer diesen veranlassen, das vorstehend beschriebene Verfahren auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische perspektivische Ansicht einer Ausführungsform eines Systems mit einer Geschirrspülmaschine;
Fig. 2 zeigt eine schematische Schnittansicht eines Details einer Geschirrspülmaschine;
Fig. 3 zeigt eine schematische Seitenansicht einer Geschirrspülmaschine;
Fig. 4 zeigt eine weitere schematische Seitenansicht einer Geschirrspülmaschine;
Fig. 5 zeigt eine weitere schematische Seitenansicht einer Geschirrspülmaschine;
Fig. 6 zeigt ein schematisches Beispiel eines erfassten Bildes und eines Klassifizierungsergebnisses;
Fig. 7 zeigt ein schematisches Blockdiagramm einer Anordnung mit einer Geschirrspülmaschine; und
Fig. 8 zeigt ein schematisches Blockschaltbild eines beispielhaften Verfahrens zum Betreiben einer Geschirrspülmaschine.

In den Figuren sind gleiche oder funktionsgleiche Elemente mit denselben Bezugszeichen versehen worden, sofern nichts anderes angegeben ist.

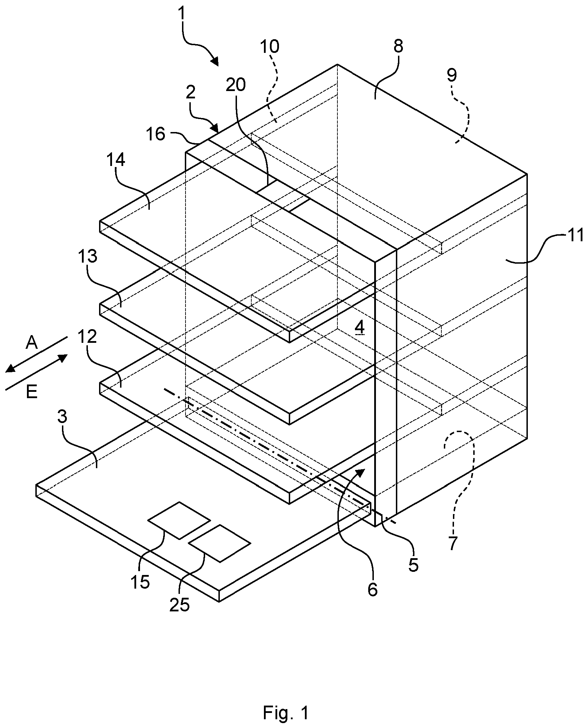

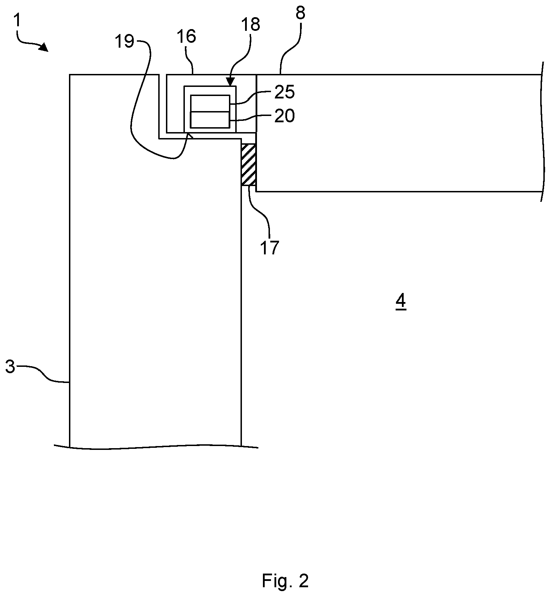

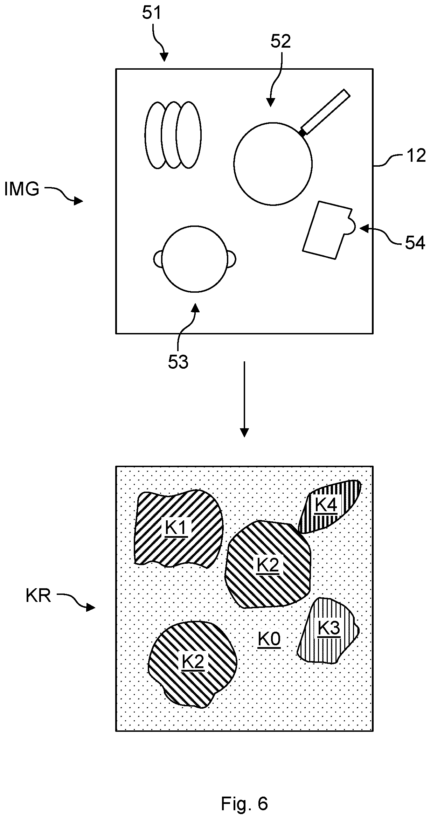

Die Fig. 1 zeigt eine schematische perspektivische Ansicht eines Systems mit einer Geschirrspülmaschine 1, die hier als Haushalts-Geschirrspülmaschine ausgebildet ist. Die Haushalts-Geschirrspülmaschine 1 umfasst einen Spülbehälter 2, der durch eine Tür 3, insbesondere wasserdicht, verschließbar ist. Hierzu kann zwischen der Tür 3 und dem Spülbehälter 2 eine Dichteinrichtung 17 (siehe Fig. 2) vorgesehen sein. Der Spülbehälter 2 ist vorzugweise quaderförmig. Der Spülbehälter 2 kann in einem Gehäuse der Haushalts-Geschirrspülmaschine 1 angeordnet sein. Der Spülbehälter 2 und die Tür 3 können eine Spülkammer 4 zum Spülen von Spülgut 51, 52, 53, 54 (siehe Fig. 6) bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. An einer Vorderseite des Spülbehälters 2 ist ein umlaufender Spülbehälterflansch 16 vorgesehen, der beispielsweise die Beschickungsöffnung 6 umrahmt. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushalts-Geschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschubrichtung E in den Spülbehälter 2 hineinschiebbar oder hineinfahrbar und entgegen der Einschubrichtung E in einer Auszugsrichtung A aus dem Spülbehälter 2 herausziehbar oder herausfahrbar.

Weiterhin sind eine Steuerungsvorrichtung 15 und eine Bildanalyseeinheit 25 in der Tür 3 der Haushalts-Geschirrspülmaschine 1 angeordnet. Die Steuerungsvorrichtung 15 ist zum Durchführen eines Spülprogramms eingerichtet. In oder an dem Spülbehälterflansch 16 ist eine Bilderfassungseinrichtung 20 angeordnet, die zum Erfassen eines Bildes IMG (siehe Fig. 6) der Spülgutaufnahmen 12, 13, 14 eingerichtet ist. Das erfasste Bild IMG wird von der Bilderfassungseinrichtung 20 an die Bildanalyseeinheit 25 ausgegeben. Die Bildanalyseeinheit 25 ist zum Klassifizieren des Bildes IMG und zum Ausgeben eines Klassifizierungsergebnisses KR (siehe Fig. 6) an die Steuerungsvorrichtung 15 eingerichtet. Die Steuerungsvorrichtung 15 ist zum Parametrieren des Spülprogramms in Abhängigkeit des Klassifizierungsergebnisses KR eingerichtet.

Fig. 2 zeigt eine schematische Schnittansicht eines Details einer Geschirrspülmaschine 1, beispielsweise der Haushalts-Geschirrspülmaschine der Fig. 1. In der Fig. 2 ist ein Schnitt durch einen der Decke 8 des Spülbehälters 2 (siehe Fig. 1) zugeordneten oberen Flanschabschnitt des Spülbehälterflansches 16 gezeigt. Die Tür 3 ist in der geschlossenen Position dargestellt, wobei eine Dichteinrichtung 17 zwischen der Tür 3 und dem Spülbehälter 2 angeordnet ist und die Spülkammer 4 fluiddicht verschließt. In dem Spülbehälterflansch 16 ist ein Hohlraum 18 angeordnet, der nach in Richtung der Tür 3 mit einem transparenten Element 19, das hier als eine Glasscheibe ausgebildet ist, begrenzt ist. Der Hohlraum 18 ist gegenüber seiner Umgebung vorzugsweise fluiddicht abgedichtet. In dem Hohlraum 18 sind in diesem Beispiel eine Bilderfassungseinrichtung 20 und eine Bildanalyseeinheit 25 angeordnet. Die Bilderfassungseinrichtung 20 und die Bildanalyseeinheit 25 sind hierbei auf einem gemeinsamen Substrat integriert. In der gezeigten Anordnung ist die Bilderfassungseinrichtung 20 vorteilhaft zum Erfassen eines Bildes IMG (siehe Fig. 6) der Spülgutaufnahmen 12, 13, 14 (siehe Fig. 1) durch das transparente Element 19 hindurch eingerichtet. Der Hohlraum 18 ist möglichst nahe zu einem Mittelpunkt des oberen Flanschabschnitts in diesem angeordnet, bevorzugt genau in dessen Mitte, so dass die Bilderfassungseinrichtung 20 die Spülgutaufnahme 12, 13, 14 möglichst symmetrisch abbilden kann.

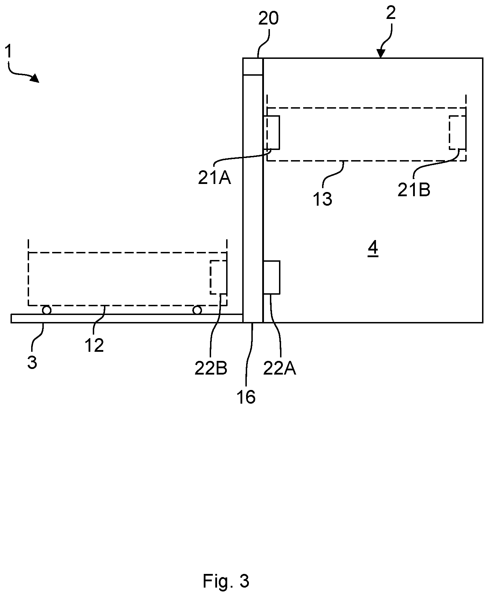

Fig. 3 zeigt eine schematische Seitenansicht einer Geschirrspülmaschine 1, beispielsweise der Haushalts-Geschirrspülmaschine 1 der Fig. 1 oder 2. Die Tür 3 ist in der geöffneten Position gezeigt. Die Bilderfassungseinrichtung 20 ist vorzugsweise wie anhand der Fig. 2 erläutert in einem Hohlraum 18 (siehe Fig. 2) des Spülbehälterflansches 16 angeordnet. Die Geschirrspülmaschine 1 der Fig. 3 weist zwei Spülgutaufnahmen 12, 13 auf, die Spülbehälter 2 hinein- oder herausverlagerbar sind. Die untere Spülgutaufnahme 12 befindet sich hier in einer herausverlagerten Position, wo sie einfach mit Spülgut 51, 52, 53, 54 (siehe Fig. 6) beladen werden kann. Zusätzlich weist die Geschirrspülmaschine 1 zwei Positionssensoreinheiten 21A, 22A auf, die an einer vorderen Kante des Spülbehälters 2, wo auch der Spülbehälterflansch 16 angebracht ist, angeordnet sind. Die Positionssensoreinheiten 21A, 22A sind als Magnetsensoren ausgebildet. Jede der Spülgutaufnahmen 12, 13 weist einen Magnet 21B, 22B auf, der in einem hinteren Bereich der jeweiligen Spülgutaufnahme 12, 13 angeordnet ist.

Wenn die jeweilige Spülgutaufnahme aus dem Spülbehälter 2 herausgezogen wird, wird der Magnet 21B, 22B an dem jeweiligen Magnetsensor 21A, 22A vorbeigeführt, was der jeweilige Magnetsensor 21A, 21B erfasst. Hierbei kann der Magnetsensor 21A, 22A beispielsweise auch eine Bewegungsrichtung des Magnets 21B, 22B erfassen. Wenn der untere Magnetsensor 22A erfasst, dass der Magnet 22B der unteren Spülgutaufnahme 12 vorbeigeführt wird, gibt er beispielsweise ein Positionssignal an die Bilderfassungseinrichtung 20 aus, woraufhin diese ein Bild IMG (siehe Fig. 6) erfasst. Das Bild IMG wird vorzugsweise dann erfasst, wenn die jeweilige Spülgutaufnahme 12, 13 in den Spülbehälter 2 hineinverlagert wird, da dann davon ausgegangen werden kann, dass der aktuelle Beladevorgang abgeschlossen ist. Durch die Verwendung einer jeweils einer Spülgutaufnahme 12, 13, 14 zugeordneten Positionssensoreinheit 21A, 22A ist eine Zuordnung eines erfassten Bildes IMG zu der jeweiligen Spülgutaufnahme 12, 13, 14 möglich.

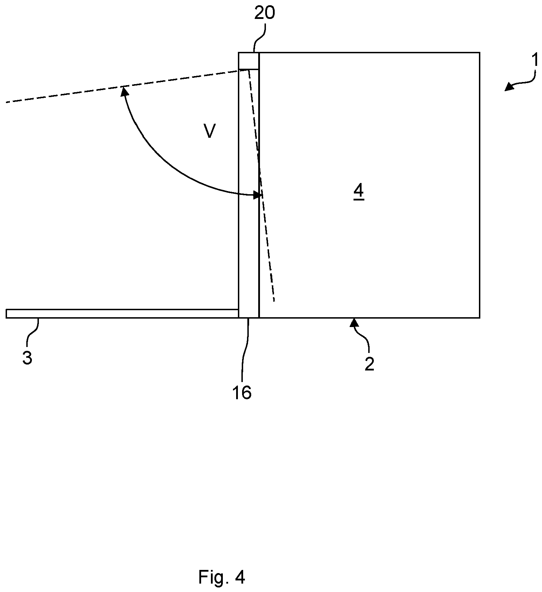

Fig. 4 zeigt eine weitere schematische Seitenansicht einer Geschirrspülmaschine 1, beispielsweise der Haushalts-Geschirrspülmaschine der Fig. 1, 2 oder 3. Die Tür 3 ist hier in ihrer geöffneten Position gezeigt. In der Fig. 4 ist schematisch der vertikale Bildwinkel V, den die Bilderfassungseinrichtung 20 aufweist, dargestellt. Der vertikale Bildwinkel V beträgt vorzugsweise 90°, kann aber auch größer sein. Die Bilderfassungseinrichtung 20 ist vorzugsweise derart ausgerichtet, dass ein Winkel zwischen einer optischen Achse und einer horizontalen Richtung 120° - 135° beträgt (der spitze Wechselwinkel hierzu liegt entsprechend im Bereich von 45° - 60°). Damit ist sichergestellt, dass die Bilderfassungseinrichtung 20 jede der Spülgutaufnahmen 12, 13, 14 (siehe Fig. 1 oder 3) in ihrer jeweiligen Gesamtlänge erfasst.

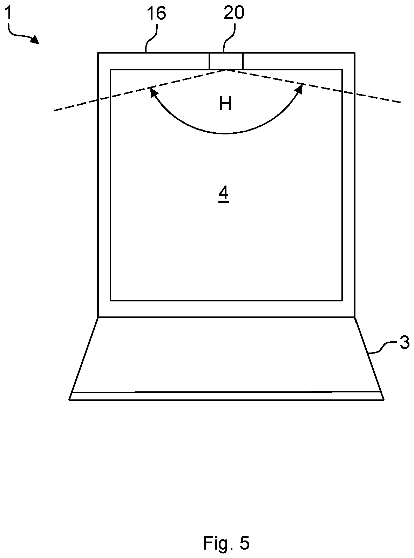

Fig. 5 zeigt eine schematische Frontansicht einer Geschirrspülmaschine1, beispielsweise der Haushalts-Geschirrspülmaschine der Fig. 1, 2 oder 3. Die Tür 3 ist hier in ihrer geöffneten Position gezeigt. In der Fig. 4 ist schematisch der horizontale Bildwinkel H, den die Bilderfassungseinrichtung 20 aufweist, dargestellt. Der horizontale Bildwinkel H beträgt vorzugsweise wenigstens 120°, kann aber auch größer sein. Damit ist sichergestellt, dass die Bilderfassungseinrichtung 20 jede der Spülgutaufnahmen 12, 13, 14 (siehe Fig. 1 oder 3) in ihrer jeweiligen Gesamtbreite erfasst.

Fig. 6 zeigt ein schematisches Beispiel eines erfassten (digitalen) Bildes IMG und eines Klassifizierungsergebnisses KR. Das Bild IMG wurde beispielsweise von der Bilderfassungseinrichtung 20 (siehe Fig. 1 - 5 oder 7) einer der Geschirrspülmaschinen 1 der Fig. 1 - 5 oder 7 erfasst und das Klassifizierungsergebnis KR wurde beispielsweise von der Bildanalyseeinheit 25 (siehe Fig. 1, 2 oder 6) der Fig. 1, 2 oder 6 ermittelt. Das erfasste Bild IMG zeigt hierbei beispielsweise die untere Spülgutaufnahme 12 mit darin angeordnetem Spülgut 51, 52, 53, 54. Hierbei handelt es sich um Teller 51 aus Keramik oder Porzellan, eine Pfanne 52 aus Metall mit einem Kunststoffgriff, einen Topf 53 aus Metall und einem Bierkrug 54 aus Glas. Die Bilderfassungseinrichtung 20 erfasst hierbei ein Farbbild mit einem erweiterten Spektralbereich von 360 nm - 2500 nm.

Die Bildanalyseeinheit 25 (siehe Fig. 1, 2 oder 6) ist zum Klassifizieren des Spülguts 51, 52, 53, 54 auf Basis des von der Bilderfassungseinrichtung 20 erfassten Bildes IMG eingerichtet. Vorzugsweise wählt die Bildanalyseeinheit 25 aus dem gesamten Spektralbereich zwei Teilbereiche (Farbkanäle) aus, die sich nicht überlappen. Die Auswahl wird insbesondere derart getroffen, dass Kontraste zwischen den unterschiedlichen, jeweils einer Klasse zugeordneten Spülgut-Materialien besonders hoch sind. Vorzugsweise werden die zu verwendenden Farbkanäle für eine Geschirrspülmaschine 1 vorbestimmt und bleiben dann festgelegt. Für unterschiedliche Geschirrspülmaschinen 1 können aber auch unterschiedliche Farbkanäle ausgewählt werden. Es kann ferner vorgesehen sein, dass die Auswahl der Farbkanäle in Abhängigkeit bestimmter Parameter, wie beispielsweise einer Umgebungshelligkeit, einer Farbtemperatur des Umgebungslichts oder dergleichen jedes Mal neu erfolgt. Dabei kann auch vorgesehen sein, dass ein Farbkanal verbreitert oder verschmälert wird. Auf diese Weise ist sichergestellt, dass die Bildanalyseeinheit 25 auf Grundlage der hohen Kontraste eine zuverlässige Klassifikation durchführt.

In diesem Beispiel wird das Spülgut 51, 52, 53, 54 in die Klassen Leer K0, Keramik K1, Metall K2, Glas K3 und Kunststoff K4 klassifiziert. Weiterhin kann eine Klasse für Holz vorgesehen sein. Dies erfolgt beispielsweise mittels eines neuronalen Netzwerks, das eine Objekterkennung durchführt. Die Klassifizierung erfolgt vorzugsweise pixelgenau. Das Klassifizierungsergebnis KR kann, wie in der Fig. 6 dargestellt, als eine zweidimensionale Matrix ausgegeben werden, die so viele Zeilen und Spalten aufweist, wie das digitale Bild IMG. Jeder Eintrag der Matrix wird hierbei einer der Klassen K0 - K4 zugeordnet.

Das Klassifizierungsergebnis KR umfasst damit eine quantitative Klassifizierung inklusive einer jeweiligen Position des in der Spülgutaufnahme 12 angeordneten Spülguts 51, 52, 53, 54.

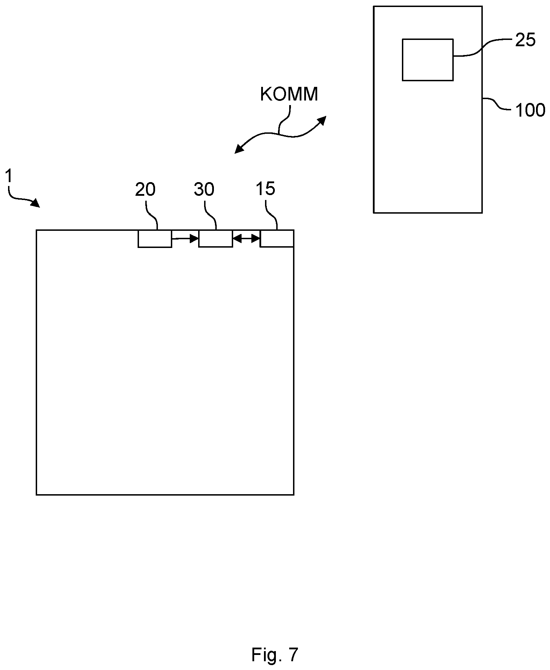

Fig. 7 zeigt ein schematisches Blockdiagramm einer Anordnung mit einer Geschirrspülmaschine 1 und einer externen Einrichtung 100. Die Geschirrspülmaschine 1 weist beispielsweise alle Merkmale der in den Fig. 1 - 5 dargestellten Geschirrspülmaschinen auf. Zusätzlich hierzu umfasst die Geschirrspülmaschine 1 eine Kommunikationseinheit 30 zum Herstellen einer Kommunikationsverbindung KOMM zu der externen Einrichtung 100, die beispielsweise ein von einem Hersteller der Geschirrspülmaschine 1 betriebener Server ist, der über das Internet erreichbar ist. Der Server 100 umfasst hierbei eine Bildanalyseeinheit 25, die zum Klassifizieren von in der Spülgutaufnahme 12, 13, 14 (siehe Fig. 1 oder 3) der Geschirrspülmaschine 1 angeordnetem Spülgut 51, 52, 53, 54 (siehe Fig. 6) in Abhängigkeit des erfassten Bildes IMG (siehe Fig. 6) der Spülgutaufnahme 12, 13, 14 und zum Ausgeben eines Klassifizierungsergebnisses KR (siehe Fig. 6) an die Kommunikationseinheit 30 der Geschirrspülmaschine 1 eingerichtet ist. Die Kommunikationseinheit 30 empfängt das erfasste Bild IMG von der Bilderfassungseinrichtung 20 und überträgt es über die Kommunikationsverbindung KOMM an die Bildanalyseeinheit 25. Dann empfängt die Kommunikationseinheit 30 das Klassifizierungsergebnis KR von der Bildanalyseeinheit 25 über die Kommunikationsverbindung KOMM und gibt dieses an die Steuerungsvorrichtung 15 der Geschirrspülmaschine 1 aus. Die Steuerungsvorrichtung 15 ist zum Parametrieren des Spülprogramms in Abhängigkeit des Klassifizierungsergebnisses KR eingerichtet.

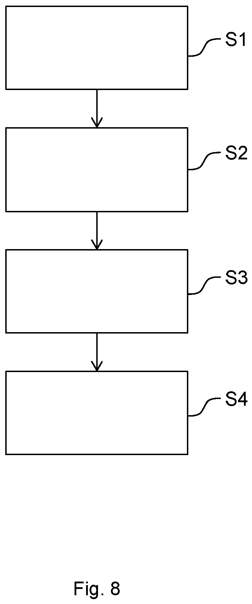

Fig. 8 zeigt ein schematisches Blockschaltbild eines beispielhaften Verfahrens zum Betreiben einer Geschirrspülmaschine 1, beispielsweise der Geschirrspülmaschine der Fig. 1 - 5 oder 7. In einem ersten Schritt S1 wird ein Bild IMG (siehe Fig. 6) einer Spülgutaufnahme 12, 13, 14 Siehe Fig. 1, 3 oder 6) der Geschirrspülmaschine 1 erfasst. Dies erfolgt beispielsweise durch eine an der Geschirrspülmaschine 1 angeordnete Bilderfassungseinrichtung 20 (siehe Fig. 1 - 5 oder 7). In einem zweiten Schritt S2 wird das in der Spülgutaufnahme 12, 13, 14 angeordnete Spülgut 51, 52, 53, 54 (siehe Fig. 6) in Abhängigkeit des erfassten Bildes IMG klassifiziert. Dies erfolgt beispielsweise durch eine Bildanalyseeinheit 25 (siehe Fig. 1, 3 oder 7). In einem dritten Schritt S3 wird ein Klassifizierungsergebnis KR (siehe Fig. 6) ausgegeben, vorzugsweise an eine Steuerungsvorrichtung 15 (siehe Fig. 1 oder 6). In einem vierten Schritt S4 wird ein Spülprogramm zum Spülen des Spülguts 51, 52, 53, 54 in Abhängigkeit des Klassifizierungsergebnisses KR parametriert.

Obwohl die vorliegende Erfindung anhand von Ausführungsbeispielen beschrieben wurde, ist sie vielfältig modifizierbar. Insbesondere können Elemente, die in einer Fig. nicht gezeigt sind, in der gleichen Weise vorhanden sein, wie dies anhand einer anderen Fig. beschrieben ist. So weist beispielsweise jede Geschirrspülmaschine eine Steuerungsvorrichtung auf, auch wenn diese bei verschiedenen Geschirrspülmaschinen unterschiedlich ausgebildet sein können.

### Verwendete Bezugszeichen:

- 1: Geschirrspülmaschine
- 2: Spülbehälter
- 3: Tür
- 4: Spülkammer
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 15: Steuerungsvorrichtung
- 16: Spülbehälterflansch
- 17: Dichteinrichtung
- 18: Hohlraum
- 19: transparente Seite
- 20: Bilderfassungseinrichtung
- 21A: Positionssensor
- 21B: Positionssensor
- 22A: Positionssensor
- 22B: Positionssensor
- 25: Bildanalyseeinrichtung
- 30: Kommunikationseinheit
- 51: Spülgut
- 52: Spülgut
- 53: Spülgut
- 54: Spülgut
- 100: externe Einrichtung
- A: Ausziehrichtung
- E: Einschubrichtung
- H: horizontaler Bildwinkel
- IMG: Bild
- K0: Klasse
- K1: Klasse
- K2: Klasse
- K3: Klasse
- K4: Klasse
- KOMM: Kommunikationsverbindung
- KR: Klassifizierungsergebnis
- S1: Verfahrensschritt
- S2: Verfahrensschritt
- S4: Verfahrensschritt
- S1: Verfahrensschritt
- V: vertikaler Bildwinkel

## Patentansprüche

1. System mit einer Geschirrspülmaschine (1), vorzugsweise einer Haushalts-Geschirrspülmaschine, mit einer Steuerungsvorrichtung (15) zum Durchführen eines Spülprogramms, welches mittels einer Anzahl unterschiedlicher Spülprogrammparameter parametrierbar ist, und mit einer Bilderfassungseinrichtung (20) zum Erfassen eines Bildes (IMG) einer Spülgutaufnahme (12, 13, 14) der Geschirrspülmaschine (1), wobei das System ferner eine Bildanalyseeinheit (25) zum Klassifizieren von in der Spülgutaufnahme (12, 13, 14) angeordnetem Spülgut (51, 52, 53, 54) in Abhängigkeit des erfassten Bildes (IMG) der Spülgutaufnahme (12, 13, 14) und zum Ausgeben eines Klassifizierungsergebnisses (KR) an die Steuerungsvorrichtung (15) umfasst, wobei das Klassifizierungsergebnis (KR) eine Information bezüglich einer Menge, einer Art und/oder einer Position des in der Spülgutaufnahme (12, 13, 14) angeordneten Spülguts (51, 52, 53, 54) umfasst, wobei die Steuerungsvorrichtung (15) zum Parametrieren des Spülprogramms in Abhängigkeit des Klassifizierungsergebnisses (KR) eingerichtet ist, wobei die Geschirrspülmaschine (1) eine Positionssensoreinheit (21A, 21B, 22A, 22B) zum Erfassen einer Position der Spülgutaufnahme (12, 13, 14) aufweist, **dadurch gekennzeichnet, dass** die Positionssensoreinheit (21A, 21B, 22A, 22B) auch zum Ausgeben eines Positionssignals an die Bilderfassungseinrichtung (20) eingerichtet ist, wobei die Bilderfassungseinrichtung (20) zum Erfassen des Bildes (IMG) in Abhängigkeit des Positionssignals eingerichtet ist, und wobei die Positionssensoreinheit (21A, 21B, 22A, 22B) dazu eingerichtet ist, das Positionssignal auszugeben, wenn die Spülgutaufnahme (12, 13, 14) in einem Bildfeld der Bilderfassungseinrichtung (20) vollständig sichtbar ist.

2. System nach Anspruch 1, **dadurch gekennzeichnet, dass** die Bilderfassungseinrichtung (20) zum Erfassen eines erweiterten Spektralbereichs eingerichtet ist, der zumindest den visuellen Spektralbereich und den nahen Infrarotbereich umfasst.

3. System nach Anspruch 1 oder 2, wobei die Geschirrspülmaschine (1) ferner einen Spülbehälter (2) mit einem um eine Beschickungsöffnung (6) des Spülbehälters (2) umlaufenden Spülbehälterflansch (16), wobei die Bilderfassungseinrichtung (20) in oder an einem einer Decke (8) des Spülbehälters (2) zugeordneten oberen Flanschabschnitt des Spülbehälterflansches (16) angeordnet ist, und wobei die Bilderfassungseinrichtung (20) von dem Spülbehälter (2) weg und schräg in Richtung einer von einem Boden (7) des Spülbehälters (2) aufgespannten Ebene weist.

4. System nach einem der Ansprüche 1 - 3, **gekennzeichnet durch** einen in oder an dem Spülbehälterflansch (16) vorgesehenen Hohlraum (18), in dem die Bilderfassungseinrichtung (20) zumindest abschnittsweise aufgenommen ist, wobei der Hohlraum (18), vorzugsweise in Richtung der Ebene, von einem transparenten Element (19) begrenzt ist.

5. System nach einem der Ansprüche 1 - 4, **dadurch gekennzeichnet, dass** die Bilderfassungseinrichtung (20) einen vertikalen Bildwinkel (V) von wenigstens 90° und einen horizontalen Bildwinkel (H) von wenigstens 120° aufweist.

6. System nach einem der Ansprüche 1 - 5, **dadurch gekennzeichnet, dass** die Bildanalyseeinheit (25) zum Klassifizieren des in der Spülgutaufnahme (12, 13, 14) angeordneten Spülguts (51, 52, 53, 54) in Abhängigkeit des erfassten Bildes (IMG) der Spülgutaufnahme (12, 13, 14) mittels eines neuronalen Netzwerks eingerichtet ist.

7. System nach einem der Ansprüche 1 - 6, **dadurch gekennzeichnet, dass** eine Speichereinheit zum Speichern einer Anzahl von erfassten Bildern (IMG) vorgesehen ist, wobei die Bildanalyseeinheit (25) zum Klassifizieren des in der Spülgutaufnahme (12, 13, 14) angeordneten Spülguts (51, 52, 53, 54) in Abhängigkeit von wenigstens einem der gespeicherten Bilder der Anzahl eingerichtet ist.

8. System nach einem der Ansprüche 1 - 7, **dadurch gekennzeichnet, dass** die Bildanalyseeinheit (25) in der Geschirrspülmaschine (1) integriert ist.

9. System nach Anspruch 8, **dadurch gekennzeichnet, dass** die Bilderfassungseinrichtung (20) und die Bildanalyseeinheit (25) zusammen auf einem Substrat in einem integrierten Schaltkreis angeordnet sind.

10. System nach einem der Ansprüche 1 - 9, **dadurch gekennzeichnet, dass** die Bildanalyseeinheit (25) in einer extern zu der Geschirrspülmaschine (1) angeordneten Einrichtung (100) integriert ist, wobei die Geschirrspülmaschine (1) eine Kommunikationseinheit (30) zum Übermitteln des erfassten Bildes (IMG) an die Bildanalyseeinheit (25), zum Empfangen des Klassifizierungsergebnisses (KR) von der Bildanalyseeinheit (25) und zum Ausgeben des empfangenen Klassifizierungsergebnisses (KR) and die Steuerungsvorrichtung (15) eingerichtet ist.

11. System nach einem der Ansprüche 1 - 10, **dadurch gekennzeichnet, dass** die Geschirrspülmaschine (1) mehrere Spülgutaufnahmen (12, 13, 14) aufweist, wobei die Bilderfassungseinrichtung (20) zum Erfassen zumindest eines Bildes (IMG) von jeder der Spülgutaufnahmen (12, 13, 14) eingerichtet ist.

12. Verfahren zum Betreiben einer Geschirrspülmaschine (1), vorzugsweise einer Haushalts-Geschirrspülmaschine, mit:
Erfassen einer Position einer Spülgutaufnahme (12, 13, 14) und Ausgeben eines Positionssignals, wenn die Spülgutaufnahme (12, 13, 14) in einem Bildfeld einer Bilderfassungseinrichtung (20) vollständig sichtbar ist,
Erfassen (S1) eines Bildes (IMG) einer Spülgutaufnahme (12, 13, 14) der Geschirrspülmaschine (1) in Abhängigkeit des Positionssignals,
Klassifizieren (S2) von in der Spülgutaufnahme (12, 13, 14) angeordnetem Spülgut (51, 52, 53, 54) in Abhängigkeit des erfassten Bildes (IMG),
Ausgeben (S3) eines Klassifizierungsergebnisses (KR), wobei das Klassifizierungsergebnis (KR) eine Information bezüglich einer Menge, einer Art und/oder einer Position des in der Spülgutaufnahme (12, 13, 14) angeordneten Spülguts (51, 52, 53, 54) umfasst, und
Parametrieren (S4) eines Spülprogramms zum Spülen des Spülguts (51, 52, 53, 54) in Abhängigkeit des Klassifizierungsergebnisses (KR).

## Claims

1. System comprising a dishwasher (1), preferably a household dishwasher, comprising a control device (15) for carrying out a washing program, which can be parameterised by means of a number of different washing program parameters, and comprising an image-capturing device (20) for capturing an image (IMG) of a receptacle for items to be washed (12, 13, 14) of the dishwasher (1), wherein the system also comprises an image analysis unit (25) for classifying items to be washed (51, 52, 53, 54) arranged in the receptacle for items to be washed (12, 13, 14), depending on the captured image (IMG) of the receptacle for items to be washed (12, 13, 14) and for outputting a classification result (KR) to the control device (15), wherein the classification result (KR) comprises information regarding the quantity, the type and/or the position of the items to be washed (51, 52, 53, 54) arranged in the receptacle for items to be washed (12, 13, 14), wherein the control device (15) is designed to parameterise the washing program depending on the classification result (KR), wherein the dishwasher (1) has a position sensor unit (21A, 21B, 22A, 22B) for capturing a position of the receptacle for items to be washed (12, 13, 14), **characterised in that** the position sensor unit (21A, 21B, 22A, 22B) is also designed for outputting a position signal to the image-capturing device (20), wherein the image-capturing device (20) is designed to capture the image (IMG) depending on the position signal, and wherein the position sensor unit (21A, 21B, 22A, 22B) is designed to output the position signal when the receptacle for items to be washed (12, 13, 14) is completely visible, in a field of view of the image-capturing device (20).

2. System according to claim 1, **characterised in that** the image-capturing device (20) is designed to capture an extended spectral range which comprises at least the visual spectral range and the near infrared range.

3. System according to claim 1 or 2, wherein the dishwasher (1) also comprises a washing container (2) with a peripheral washing container flange (16) around a loading opening (6) of the washing container (2), wherein the image-capturing device (20) is arranged in or on an upper flange portion of the washing container flange (16) assigned to a ceiling (8) of the washing container (2), and wherein the image-capturing device (20) faces away from the washing container (2) and obliquely in the direction of a plane spanned by a bottom (7) of the washing container (2).

4. System according to one of claims 1 - 3, **characterised by** a cavity (18), in which the image-capturing device (20) is received at least in some sections, provided in or on the washing container flange (16), wherein the cavity (18) is defined by a transparent element (19), preferably in the direction of the plane.

5. System according to one of claims 1 - 4, **characterised in that** the image-capturing device (20) has a vertical image angle (V) of at least 90° and a horizontal image angle (H) of at least 120°.

6. System according to one of claims 1 - 5, **characterised in that** the image analysis unit (25) is designed to classify the items to be washed (51, 52, 53, 54) arranged in the receptacle for items to be washed (12, 13, 14), depending on the captured image (IMG) of the receptacle for items to be washed (12, 13, 14) by means of a neural network.

7. System according to one of claims 1 - 6, **characterised in that** a memory unit is provided for storing a number of captured images (IMG), wherein the image analysis unit (25) is designed to classify the items to be washed (51, 52, 53, 54) arranged in the receptacle for items to be washed (12, 13, 14), depending on at least one of the stored images of the number of images.

8. System according to one of claims 1 - 7, **characterised in that** the image analysis unit (25) is integrated in the dishwasher (1).

9. System according to claim 8, **characterised in that** the image-capturing device (20) and the image analysis unit (25) are arranged together on a substrate in an integrated circuit.

10. System according to one of claims 1 - 9, **characterised in that** the image analysis unit (25) is integrated in a device (100) arranged externally relative to the dishwasher (1), wherein the dishwasher (1) is designed as a communication unit (30) for transmitting the captured image (IMG) to the image analysis unit (25), for receiving the classification result (KR) from the image analysis unit (25) and for outputting the received classification result (KR) to the control device (15).

11. System according to one of claims 1 - 10, **characterised in that** the dishwasher (1) has a plurality of receptacles for items to be washed (12, 13, 14), wherein the image-capturing device (20) is designed to capture at least one image (IMG) of each of the receptacles for items to be washed (12, 13, 14).

12. Method for operating a dishwasher (1), preferably a household dishwasher, comprising:
capturing a position of a receptacle for items to be washed (12, 13, 14) and
outputting a position signal when the receptacle for items to be washed (12, 13, 14) is completely visible in a field of view of the image-capturing device (20),
capturing (S1) an image (IMG) of a receptacle for items to be washed (12, 13, 14) of the dishwasher (1) depending on the position signal,
classifying (S2) the items to be washed (51, 52, 53, 54) arranged in the receptacle for items to be washed (12, 13, 14) depending on the captured image (IMG),
outputting (S3) a classification result (KR), wherein the classification result (KR) comprises information regarding the quantity, the type and/or the position of the items to be washed (51, 52, 53, 54) arranged in the receptacle for items to be washed (12, 13, 14), and
parameterising (S4) a washing program for washing the items to be washed (51, 52, 53, 54) depending on the classification result (KR).

## Revendications

1. Système comprenant un lave-vaisselle (1), de préférence un lave-vaisselle électroménager, comprenant un dispositif de commande (15) pour l'exécution d'un programme de lavage, lequel peut être paramétré à l'aide d'un nombre de paramètres de programmation de lavage différents, et comprenant un dispositif de détection d'image (20) pour la détection de l'image (IMG) d'un compartiment des articles à laver (12, 13, 14) du lave-vaisselle (1), dans lequel le système comprend en outre une unité d'analyse d'image (25) pour la catégorisation des articles à laver (51, 52, 53, 54) se trouvant dans le compartiment des articles à laver (12, 13, 14) en fonction de l'image (IMG) détectée du compartiment des articles à laver (12, 13, 14) et pour la production d'un résultat de catégorisation (KR) au dispositif de commande (15), dans lequel le résultat de catégorisation (KR) contient une information relative à une quantité, à un type et/ou à une position des articles à laver (51, 52, 53, 54) se trouvant dans le compartiment des articles à laver (12, 13, 14), dans lequel le dispositif de commande (15) est configuré pour le paramétrage du programme de lavage en fonction du résultat de catégorisation (KR), dans lequel le lave-vaisselle (1) présente une unité de détection de la position (21A, 21B, 22A, 22B) pour la détection d'une position du compartiment des articles à laver (12, 13, 14),
**caractérisé en ce que**
l'unité de détection de position (21A, 21B, 22A, 22B) est configurée également pour la production d'un signal de position au dispositif de détection d'image (20),
dans lequel le dispositif de détection d'image (20) est configuré pour la détection de l'image (IMG) en fonction du signal de position, et dans lequel l'unité de détection de position (21A, 21B, 22A, 22B) est configurée pour émettre le signal de position quand le compartiment des articles à laver (12, 13, 14) est entièrement visible dans un champ d'image du dispositif de détection d'image (20).

2. Système selon la revendication 1, **caractérisé en ce que** le dispositif de détection d'image (20) est configuré pour la détection d'une région du spectre élargie, laquelle comprend au moins la région du spectre visible et la région de l'infrarouge proche.

3. Système selon la revendication 1 ou 2, dans lequel le lave-vaisselle (1) comprend en outre une cuve de lavage (2) comprenant une bride de cuve de lavage (16) entourant une ouverture de chargement (6) de la cuve de lavage (2), dans lequel le dispositif de détection d'image (20) se trouve dans ou sur une section de bride de la bride de cuve de lavage (16) supérieure associée à un couvercle (8) de la cuve de lavage (2), et dans lequel le dispositif de détection d'image (20) est orienté éloigné de la cuve de lavage (2) et en oblique dans la direction d'un plan étendu d'un plancher (7) de la cuve de lavage (2).

4. Système selon l'une des revendications 1-3, **caractérisé par** un espace creux (18) configuré dans ou sur la bride de cuve de lavage (16), qui loge au moins en partie le dispositif de détection d'image (20), l'espace creux (18) étant délimité de préférence dans la direction du plan, par un élément transparent (19).

5. Système selon l'une des revendications 1-4, **caractérisé en ce que** le dispositif de détection d'image (20) présente un angle d'image vertical (V) d'au moins 90° et un angle d'image horizontal (H) d'au moins 120°.

6. Système selon l'une des revendications 1-5, **caractérisé en ce que** l'unité d'analyse d'image (25) est configurée pour la catégorisation des articles à laver (51, 52, 53, 54) se trouvant dans le compartiment des articles à laver (12, 13, 14) en fonction de l'image (IMG) détectée du compartiment des articles à laver (12, 13, 14) au moyen d'un réseau neuronal.

7. Système selon l'une des revendications 1-6, **caractérisé en ce qu'**une unité de stockage pour le stockage d'un nombre d'images (IMG) détectées est prévue, l'unité d'analyse d'image (25) étant configurée pour la catégorisation des articles à laver (51, 52, 53, 54) se trouvant dans le compartiment des articles à laver (12, 13, 14) en fonction d'au moins l'une des images stockées prises dans ce nombre.

8. Système selon l'une des revendications 1-7, **caractérisé en ce que** l'unité d'analyse d'image (25) est intégrée au lave-vaisselle (1).

9. Système selon la revendication 8, **caractérisé en ce que** le dispositif de détection d'image (20) ainsi que l'unité d'analyse d'image (25) se trouvent ensemble sur un substrat dans un circuit de commutation intégré.

10. Système selon l'une des revendications 1-9, **caractérisé en ce que** l'unité d'analyse d'image (25) est intégrée à un dispositif (100) situé en externe par rapport au lave-vaisselle (1), le lave-vaisselle (1) comprenant une unité de communication (30) configurée pour la transmission de l'image (IMG) détectée à l'unité d'analyse d'image (25), pour la réception du résultat de catégorisation (KR) de l'unité d'analyse d'image (25) et pour la production du résultat de catégorisation (KR) reçu au dispositif de commande (15).

11. Système selon l'une des revendications 1-10, **caractérisé en ce que** le lave-vaisselle (1) présente plusieurs compartiments des articles à laver (12, 13, 14), le dispositif de détection d'image (20) étant configuré pour la détection d'au moins une image (IMG) de chacun des compartiments des articles à laver (12, 13, 14).

12. Procédé de fonctionnement d'un lave-vaisselle (1), de préférence d'un lave-vaisselle électroménager, comprenant :
la détection d'une position d'un compartiment des articles à laver (12, 13, 14) et la production d'un signal de position quand le compartiment des articles à laver (12, 13, 14) est complètement visible dans le champ d'image d'un dispositif de détection d'image (20),
la détection (S1) d'une image (IMG) d'un compartiment des articles à laver (12, 13, 14) du lave-vaisselle (1) en fonction du signal de position,
la catégorisation (S2) des articles à laver (51, 52, 53, 54) se trouvant dans le compartiment des articles à laver (12, 13, 14) en fonction de l'image (IMG) détectée,
la production (S3) d'un résultat de catégorisation (KR), le résultat de catégorisation (KR) comprenant une information relative à une quantité, à un type et/ou à une position des articles à laver (51, 52, 53, 54) se trouvant dans le compartiment des articles à laver (12, 13, 14), et
le paramétrage (S4) d'un programme de lavage pour le lavage des articles à laver (51, 52, 53, 54) en fonction du résultat de catégorisation (KR).
